# EUROPÄISCHE PATENTSCHRIFT

(11) **EP 0 645 027 B1**
(45) Veröffentlichungstag und Bekanntmachung des Hinweises auf die Patenterteilung: **06.03.1996**
(21) Anmeldenummer: 93912893.0
(22) Anmeldetag: 04.06.1993
(51) Int. Cl.: G05B 19/40

(54) **VERFAHREN ZUM ANSTEUERN VON ELEKTRISCHEN, STROMGESTEUERTEN STELLGLIEDERN**
PROCESS FOR DRIVING ELECTRIC, CURRENT-CONTROLLED ACTUATORS
PROCEDE POUR COMMANDER DES ELEMENTS DE REGLAGE ELECTRIQUES EXCITES PAR COURANT DE SOURCE

(30) Priorität: 06.06.1992 DE 4218782
(43) Veröffentlichungstag der Anmeldung: 29.03.1995
(73) Patentinhaber: ZF FRIEDRICHSHAFEN AG, D-88038 Friedrichshafen (DE)
(72) Erfinder: EGE, Hans-Jürgen, D-7980 Ravensburg (DE); HORSAK, Günther, D-7990 Friedrichshafen (DE); WIGGERMANN, Peter, D-7994 Langenargen (DE)
(74) Vertreter: Raue, Reimund
(86) Internationale Anmeldenummer: EP9301421
(87) Internationale Veröffentlichungsnummer: WO9325946

(56) Entgegenhaltungen:
- EP-A- 0 294 918
- DE-A- 3 931 962

## Beschreibung

Die Erfindung betrifft ein Verfahren zum Ansteuern von elektrischen, stromgesteuerten Stellgliedern nach dem Oberbegriff des Anspruchs. In der Fahrzeugtechnik werden immer mehr elektrische, stromgesteuerte Stellglieder, z. B. Proportionalventile, verwendet, deren Stromstärke in Abhängigkeit von prozeßrelevanten Einflußgrößen in offenen oder geschlossenen Regelkreisen geregelt wird. Solche Regelkreise sind vielfältig bekannt, z. B. durch VDI-Nachrichten Nr. 38, 8. September 1981, Seite 16; oder VDI-Berichte Nr. 418, 1981, Seite 186; oder Automotive Engineering, 1984, Seite 79.

Bei den geschlossenen Regelkreisen wird mittels eines Mikroprozessors von den Einflußgrößen, die eine Verstellung der Stellglieder bewirken sollen, eine Sollwertgröße für die Stromstärke ermittelt und ausgegeben und mit dem Istwert der Stromstärke des Stellgliedes verglichen. Entsprechend der Differenz zwischen Sollwert und Istwert wird die Stellgröße für das Stellglied erhöht oder verringert. Um die Stromstärke an jedem Stellglied zu erfassen, benötigt man der Anzahl der Stellglieder entsprechende Strommeßeinrichtungen. Ferner ist für die Verarbeitung der Daten ein relativ leistungsfähiger Mikroprozessor erforderlich. Die Zeitkonstante solcher geschlossenen Regelkreise hängt maßgeblich von der Leistungsfähigkeit des eingesetzten Mikroprozessors ab.

Schneller arbeiten Steuerprozesse, bei denen der Istwert der Stromstärke nicht gemessen und mit dem Sollwert verglichen wird. Solche Steuerungen sind in der Regel jedoch nicht genau genug, da sie Störgrößen, die die prozeßrelevanten Einflußgrößen und Stellglieder beeinflussen, nicht ausreichend berücksichtigen. Zwar ist es bekannt, die wichtigsten Störgrößen getrennt zu erfassen und ihren Einfluß durch entsprechende Programme zu kompensieren. Dies ist jedoch sehr aufwendig, wenn zahlreiche Störgrößen und Stellglieder berücksichtigt werden müssen. Ferner sind nicht alle Störgrößen unmittelbar erfaßbar.

Der Erfindung liegt die Aufgabe zugrunde, ein Verfahren zum Ansteuern von elektrischen, stromgesteuerten Stellgliedern zu schaffen, das mit geringem Aufwand eine schnelle und genaue Ansteuerung der Stellglieder gestattet.

Die Aufgabe wird bei einem Verfahren nach dem Oberbegriff durch die Merkmale des kennzeichnenden Teils des Anspruchs gelöst.

Bei dem erfindungsgemäßen Verfahren handelt es sich um einen offenen Steuerprozeß, bei dem die Sollwerte für die Stromstärken der einzelnen Stellglieder in üblicher Weise in Abhängigkeit von prozeßrelevanten Einflußgrößen von einem Mikroprozessor ermittelt und ausgegeben werden. Die Störgrößen werden jedoch nicht einzeln erfaßt, sondern nur ihr gemeinsamer Einfluß auf die Stromstärke der Stellglieder. Hierzu wird in den Zwischenzeiten, in denen an den Eingängen des Mikroprozessors keine Verstellsignale von Einflußgrößen anliegen, ein Programm zur Ermittlung von Korrekturgrößen (Modulationsprogramm) aktiviert, nach dem für jedes Stellglied getrennt nacheinander Ausgangssignale erzeugt werden (Modulation), die unterhalb der Ansprechschwelle des Prozesses liegen. Gleichzeitig wird der Strom der Stellglieder gemessen und aus den Stromsignalen Kompensationswerte ermittelt und zwischengespeichert. Sobald am Eingang des Mikroprozessors prozeßrelevante Verstellsignale anliegen, werden diese zusammen mit den jeweils zuletzt gespeicherten Kompensationswerten zu Sollwerten für die einzelnen Stellglieder verarbeitet und ausgegeben.

Der Aufwand für ein solches Verfahren ist besonders gering, wenn man nach einer Ausgestaltung der Erfindung mit einer einzigen Strommeßeinrichtung den Summenstrom mehrerer oder aller Stellglieder erfaßt und der Mikroprozessor im Modulationsmodus die Modulationswerte für die einzelnen Stellglieder nacheinander ausgibt. Da zur gleichen Zeit während des Modulationsprogramms nur der Sollwert für ein Stellglied moduliert wird und die Sollwerte für die übrigen Stellglieder konstant sind, kann man aus dem Summenstromsignal zu verschiedenen Zeiten auf den Einfluß der Störgrößen auf die einzelnen Stellglieder zurückschließen.

Anhand der Zeichnung wird die Erfindung erläutert. Es zeigt:
- Fig. 1: eine Ausführung mit mehreren Strommeßeinrichtungen;
- Fig. 2: eine Ausführung mit einer einzigen Meßeinrichtung zur Erfassung der Summenstromstärke.

Mit 1 ist ein Mikroprozessor bezeichnet, der Speicher für prozeßrelevante Daten, Kennfelder und Ablaufprogramme umfaßt und Eingänge 2 für prozeßrelevante Einflußgrößen hat, die eine Verstellung der Stellglieder bewirken sollen. Die Signale werden im folgenden als Stellsignale bezeichnet. Ferner sind Eingänge 3 für Stromsignale vorgesehen, die von Strommeßeinrichtungen 4 erzeugt werden. Diese messen die Stromstärke elektrischer, stromgesteuerter Stellglieder, hier in Form elektromagnetischer Proportionalventile 5, die einen elektrischen Teil 6 und einen magnetisch-hydraulischen Teil 7 haben.

In Abhängigkeit von den Stellsignalen ermittelt der Mikroprozessor 1 anhand der gespeicherten Daten und Programme Sollwerte für die Stromstärken der elektrischen Teile 6 der Proportionalventile 5, wobei die Sollwerte durch Kompensationswerte korrigiert werden, die der Mikroprozessor 1 aus den Stromsignalen der Meßeinrichtungen 4 gebildet und zwischengespeichert hat. Die Sollwertsignale stehen an den Ausgängen 8 des Mikroprozessors 1 an und bewirken über einen Leistungssteller 9 eine entsprechende Stromstärke in den elektrischen Teilen 6 der Proportionalventile 5.

Von den Stellgliedern, Proportionalventilen 5, ist jeweils nur eines dargestellt, weitere (im Beispiel drei) sind durch hintereinanderliegende Tafeln 12 bis 14 angedeutet.

Auf den Steuerprozeß wirken Störgrößen 10, z. B. die Versorgungsspannung, die Temperatur usw. Die Störgrößen 10 beeinflussen die Stromstärke im elektrischen Teil 6 der Proportionalventile 5. Um diesen Einfluß zu ermitteln und zu Kompensationswerten zu verarbeiten, wird in den Zeiten, in denen an den Eingängen 2 keine Verstellsignale anliegen, ein Modulationsprogramm aktiviert, so daß an den Ausgängen 8 modulierte Sollwertsignale für die einzelnen Proportionalventile 5 entstehen, die unterhalb der Ansprechschwelle des Prozesses liegen. Aus den Stromsignalen, die aus diesen Sollwertgrößen ermittelt werden, läßt sich der gesamte Einfluß der Störgrößen ableiten und ein entsprechender Kompensationswert ermitteln. Liegen an den Eingängen 2 Verstellsignale an, wird der Modulationsmodus abgebrochen und die zuletzt gespeicherten Kompensationswerte werden für die Ermittlung der neu zu bildenden Sollwerte verwendet.

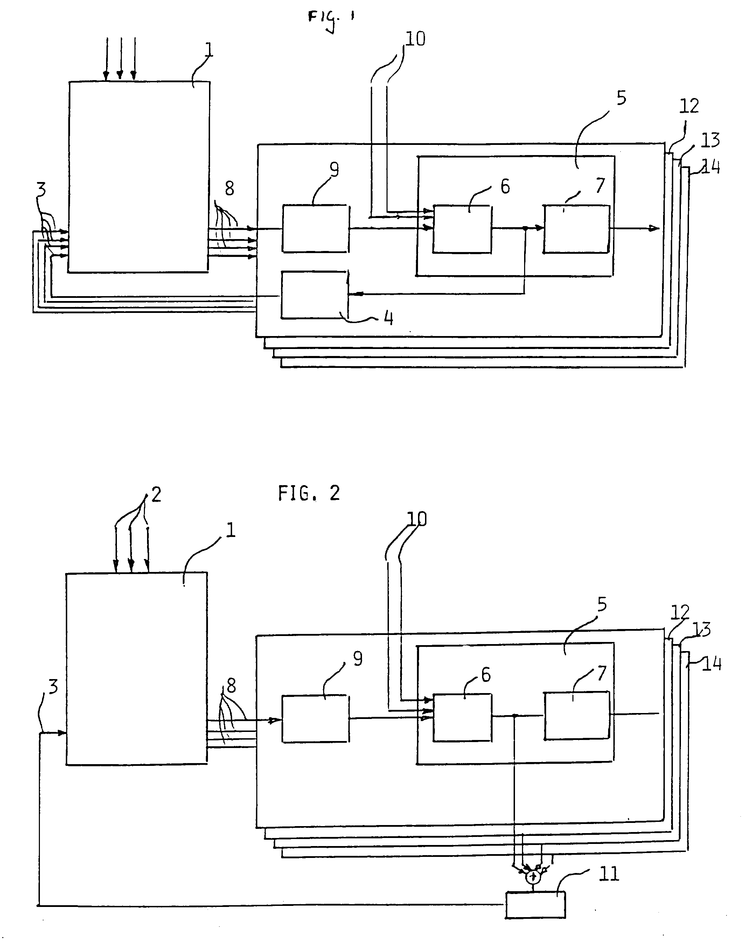

Die Ausführung nach Fig. 2 unterscheidet sich von der Ausführung nach Fig. 1 dadurch, daß anstelle einer Strommeßeinrichtung 4 für jedes Proportionalventil 5 eine einzige Strommeßeinrichtung 11 vorgesehen ist, die den Summenstrom aller (im Beispiel vier) Proportionalventile 5 mißt und dem Mikroprozessor 1 zuführt. Dieser moduliert im Modulationsmodus für jedes Proportionalventil getrennt nacheinander die Sollwerte und ermittelt so aus dem Summenstrom die Kompensationswerte für die einzelnen Proportionalventile 5.

### Bezugszeichen

- 1: Mikroprozessor
- 2: Eingang
- 3: Eingang
- 4: Strommeßeinrichtung
- 5: Proportionalventil
- 6: elektrischer Teil
- 7: magnetisch-hydraulischer Teil
- 8: Ausgang
- 9: Leistungssteller
- 10: Störgrößen
- 11: Strommeßeinrichtung
- 12: Tafel
- 13: Tafel
- 14: Tafel

## Patentansprüche

1. Verfahren zum Ansteuern von elektrischen, stromgesteuerten Stellgliedern (5) unter Verwendung eines Mikroprozessors (1) mit Speichern, in denen prozeßrelevante Daten, Kennfelder und Ablaufprogramme zum steuern einer Prozesses gespeichert sind, und mit Eingängen (2, 3), an denen Signale von Einflußgrößen eingegeben werden, die nach logischen Regeln unter Verwendung der gespeicherten Daten und Programme vom Mikroprozessor (1) zu Sollwerten für die Stromstärke der Stellglieder (5) verarbeitet und ausgegeben werden, dadurch **gekennzeichnet,**
daß in Zwischenzeiten, in denen an den Eingängen (2) des Mikroprozessors (1) keine Signale von Einflußgrößen (Verstellsignale) anliegen, die eine Verstellung der Stellglieder (5) bewirken sollen, der Mikroprozessor (1) für die einzelnen Stellglieder (5) Sollwerte nach einem standardisierten Modulationsprogramm ausgibt, die unterhalb der Ansprechschwelle des Prozesses liegen,
daß die Stromstärke der Stellglieder (5) gemessen wird und das entsprechende Stromsignal an Eingängen (3) des Mikroprozessors (1) anliegt,
daß der Mikroprozessor (1) aus den Stromänderungen, die sich durch die Modulation ergeben und Rückschlüsse auf das Vorliegen von Störgrößen zulassen, Kompensationswerte ermittelt und zwischenspeichert und daß für die Stellgrößenermittlung der zuletzt gespeicherte Kompensationswert verwendet wird, sobald an einem Eingang (2) ein Verstellsignal anliegt.

2. Verfahren nach Anspruch 1, dadurch **gekennzeichnet,**
daß mit einer einzigen Strommeßeinrichtung (11) der Summenstrom mehrerer oder aller Stellglieder (5) erfaßt wird und
daß der Mikroprozessor (1) im Modulationsmodus die Kompensationswerte für die einzelnen Stellglieder (5) nacheinander ermittelt,
daß Stellgrößen für die einzelnen Stellglieder jeweils mit den entsprechenden Kompensationswerten korrigiert werden.

## Claims

1. Process for triggering electrical, current-controlled actuators (5) using a microprocessor (1) having memories in which process-relevant data, performance characteristics and sequential programs for controlling a process are stored, and having inputs (2, 3) at which signals of influencing variables are input, which, after logical control using the stored data and programs, are processed and output by the microprocessor (1) as setpoints for the current intensity of the actuators (5),
**characterised in that**
in intervals in which no signals of the influencing variables (actuating signals), which cause displacement of the actuators, are applied to the inputs (2) of the microprocessor (1), the microprocessor (1) for the individual actuators (5) outputs setpoints according to a standardized modulation program, which setpoints are below the response threshold of the process,
that the current intensity of the actuators (5) is measured and the corresponding current signal is applied to inputs (3) of the microprocessor (1),
that from the current changes which result from the modulation and provide indication of the existence of disturbance variables, the microprocessor (1) determines and temporarily stores compensation values and that the compensation value stored last is used for the determination of the manipulated variable as soon as an actuating signal appears at one input (2).

2. Process according to Claim 1, characterised in that the total current of several or all of the actuators (5) is determined by a single current measuring device (11), and
that in the modulation mode the microprocessor (1) determines the compensation values for the individual actuators (5) in succession,
that each of the manipulated variables for the individual actuators is corrected by means of the corresponding compensation values.

## Revendications

1. Procédé pour commander des éléments de réglage (5) électriques en utilisant un microprocesseur (1) avec des mémoires dans lesquelles sont stockées des données relatives à des procédés, des bases de données et des programmes de déroulement pour piloter un procédé; et avec des entrées (2, 3) auxquelles sont amenés des signaux de grandeurs variables qui sont délivrés après avoir été traités selon des règles logiques en utilisant les données mémorisées et les programmes du microprocesseur (1), sous la forme de valeurs de référence pour l'intensité du courant des éléments de réglage (5),
**caractérisé en ce que,**
pendant les intervalles de temps au cours desquels aucun signal de grandeurs variables (signaux de réglage) susceptible de modifier la position des éléments de réglage (5), n'est amené aux entrées (2) du microprocesseur (1), le microprocesseur (1) fournit des valeurs de référence correspondant à un programme de modulations standards pour les éléments de réglage individuels (5), ces valeurs de référence étant prises parmi les seuils de réponse des procédés,
en ce que l'intensité du courant des éléments de réglage (5) est mesurée et que le signal de courant correspondant est amené aux entrées (3) du microprocesseur (1),
en ce que le microprocesseur (1) fournit des valeurs de compensation qu'il met en mémoire temporairement, ces valeurs étant issues des variations de courant qui sont dues à la modulation et génèrent des réponses à l'existence de valeurs de perturbations, et en ce que pour la recherche de grandeurs variables on utilise la dernière valeur de compensation mémorisée dès qu'apparaît une valeur de réglage à l'une des entrées (2).

2. Procédé selon la revendication 1, **caractérisé en ce que,**
l'on détermine la somme des courants de l'un ou de tous les éléments de réglage (5) à l'aide d'une seule installation de mesure du courant (11) et
le microprocesseur (1) recherche successivement les valeurs de compensation des éléments de réglage individuels (5) en mode de modulation,
les valeurs de réglage des éléments de réglage individuels sont respectivement corrigées avec les valeurs de compensation correspondantes.
